# EUROPÄISCHE PATENTSCHRIFT

(11) **EP 3 254 000 B1**
(45) Veröffentlichungstag und Bekanntmachung des Hinweises auf die Patenterteilung: **12.08.2020**
(21) Anmeldenummer: 16702329.0
(22) Anmeldetag: 28.01.2016
(51) Int. Cl.: F16H 61/4096, F16H 61/423, F16H 61/433

(54) **FAHRANTRIEB**
TRAVEL DRIVE
SYSTÈME DE PROPULSION

(30) Priorität: 02.02.2015 DE 102015001282
(43) Veröffentlichungstag der Anmeldung: 13.12.2017
(73) Patentinhaber: Liebherr-Werk Bischofshofen GmbH, 5500 Bischofshofen (AT)
(72) Erfinder: STOCK, Josef, 5500 Bischofshofen (AT)
(74) Vertreter: Herrmann, Uwe
(86) Internationale Anmeldenummer: PCT/EP2016/000145
(87) Internationale Veröffentlichungsnummer: WO 2016/124320

(56) Entgegenhaltungen:
- WO-A1-2014/065963
- DE-A1- 2 409 684
- DE-A1-102013 200 390
- US-A1- 2005 071 067
- US-A1- 2012 123 661

## Beschreibung

Die vorliegende Erfindung betrifft einen Fahrantrieb, insbesondere einen leistungsverzweigten Fahrantrieb, für eine mobile Arbeitsmaschine, insbesondere für einen Radlader, wobei der Fahrantrieb wenigstens einen in einem hydraulischen System angeordneten hydraulischen Variator sowie wenigstens ein Stellglied aufweist, das mit dem Variator derart in Verbindung steht, dass der Variator mittels des Stellgliedes verstellbar ist, wobei des Weiteren wenigstens ein mit dem hydraulischen System in Verbindung stehendes Positionsstellelement vorgesehen ist, das mit dem Stellglied derart verbunden ist, dass das Stellglied mittels des Positionsstellelementes gestellt wird.

Leistungsverzweigte Getriebe für mobile Arbeitsmaschinen unterliegen hohen Anforderungen hinsichtlich des Stellverhaltens des Variators. Der Variator umfasst üblicherweise zumindest zwei Hydrostatikeinheiten (Pumpe und Motor). Typisch für mobile Arbeitsmaschinen sind häufig vorkommende hochtransiente Betriebszustände, in denen sich die Belastungssituation ändert und in denen dementsprechend sehr hohe Anforderungen an das Verstellverhalten des Variators zu stellen sind.

Die Offenbarung der DE 10 2013 200 390 A1 zeigt einen Fahrantrieb, der die Merkmale des Oberbegriffs des Anspruchs 1 lehrt.

Die DE 24 09 684 A1 zeigt einen herkömmlichen Stellantrieb für einen Variator.

Der vorliegenden Erfindung liegt die Aufgabe zugrunde, einen Fahrantrieb der eingangs genannten Art dahingehend weiterzubilden, dass das Verstellverhalten des Fahrantriebs im transienten Bereich gegenüber bekannten Ausführungen verbessert ist.

Diese Aufgabe wird durch einen Fahrantrieb mit den Merkmalen des Anspruchs 1 gelöst. Danach ist unter anderem vorgesehen, dass zwischen dem Positionsstellelement und dem hydraulischen System zumindest ein Druckminderer angeordnet ist. Der Druckminderer, wird durch den Hochdruck aus dem hydraulischen System bzw. Kreis des Variators gespeist, allerdings nicht mit dem vollen dort bestehenden Druck, sondern mit einem durch den Druckminderer verringerten Druck.

Würde der volle in dem hydraulischen Kreis des Variators herrschende Druck an dem Positionsstellelement, das vorzugsweise als Positionsstellventil bzw. als Positionsregelventil ausgeführt ist, anliegen, kann insbesondere bei hochtransienten Vorgängen, etwa bei einem Druckanstieg im hydraulischen Kreis die Präzision des Positionsstellelementes beeinträchtigt sein, so dass das Fahrverhalten der Maschine verschlechtert ist. Durch die vorliegende Erfindung wird die Stellenergie an dem Positionsstellelement auf ein geringeres Niveau gebracht, so dass der Druckbereich, der von dem Positionsstellelement bewältigt werden muss, entsprechend geringer ist. Dadurch lässt sich das Ventil- bzw. Stellverhalten des Positionsregelventils oder des sonstigen Positionsstellelementes verbessern.

Nach der Erfindung handelt es sich bei dem Positionsstellelement um ein Positionsregelventil. Vorzugsweisehandelt es sich bei dem Druckminderer um ein Druckminderventil. Das Stellglied zur Verstellung des Variators wird vorzugsweise durch einen Stellzylinder und insbesondere durch einen Gleichlaufstellzylinder gebildet.

Denkbar ist es, dass der Druckminderer derart ausgebildet ist, dass der an dem Positionsstellelement anliegende Druck auf ein einen Wert von 75 % oder weniger und vorzugsweise auf einen Wert von 50 % oder weniger des Druckes in dem hydraulischen System verringert wird. Beträgt der Druck in dem hydraulischen System beispielsweise bis zu 450 bar, ist es denkbar, dass das Positionsstellelement mit maximal 225 bar beaufschlagt wird.

Durch die Druckminderung reagiert das Positionsstellelement bzw. Positionsregelelement gutmütiger.

In weiterer Ausgestaltung der Erfindung ist zumindest ein Speicher vorgesehen, der mit dem Positionsstelleelement derart verbunden ist, dass das Positionsstelleelement aus dem Speicher mit Hydrauliköl bzw. -medium versorgt wird. Der Speicher hat die Aufgabe, eine Mindestdruckversorgung des Positionsstellelementes sicherzustellen.

Der Speicher stellt für den Fall von Druckeinbrüchen im hydraulischen System des Variators, wie beispielsweise bei einem Lastabwurf der mobilen Arbeitsmaschine, weiterhin die Stellenergie zur Verfügung, die zur Betätigung des Positionsstellelementes benötigt wird, wodurch ebenfalls die Stellgüte im transienten Bereich verbessert wird.

Vorzugsweise befindet sich der wenigstens eine Speicher in dem durch den Druckminderer druckreduzierten Bereich, d.h. der Speicher wird nicht mit dem vollen in dem hydraulischen Kreis herrschenden Druck beaufschlagt. Ein solcher Speicher wäre bei bekannten Ausführungen ohne Druckminderung insofern problematisch, als dass bei dem vollen Druckhub sowohl das Druckniveau als auch der Druckhub im Speicher ggf. dessen Lebensdauer gefährden könnten.

Der Speicher gemäß der Erfindung hat somit die Aufgabe, in dem durch den Druckminderer reduzierten Druckniveau auch bei einer Unterversorgung aus dem hydraulischen System bzw. Kreis die notwendige Stellenergie für die Verstellung des Positionsstellelementes bereitzustellen.

Gemäß diesem Aspekt der Erfindung ist die Variatorstellung somit dadurch gekennzeichnet, dass die Stellenergie für das Positionsregelventil oder für das sonstige Positionsstellelement nicht vom Hochdruck, sondern von einem reduzierten Druckniveau gespeist wird, das durch den Einsatz wenigstens eines Druckminderers erhalten wird.

Gemäß einer Ausgestaltung steht das Stellglied mit wenigstens einem Speicher derart in Verbindung, dass Hydraulikmedium von dem Stellglied in den Speicher und/oder von dem Speicher zu dem Stellglied zu strömen vermag.

Wie oben ausgeführt, werden an den hydraulischen Variator hohe Anforderungen hinsichtlich der Stellgenauigkeit gestellt. Üblicherweise wird über eine elektronische Steuerung und Regelung die Stellposition an das Positionsstellelement vorgegeben. In hochtransienten Vorgängen kann der Fall eintreten, dass die Steuerung nicht schnell genug reagiert: es muss zunächst die sich anbahnende Situation erkannt werden, dann müssen die erforderlichen Schritte gesetzt werden. Dies kann unter Umständen dazu führen, dass es zu einem nicht zufriedenstellenden Fahrverhalten kommt.

Der hydraulische Variator weist innere Kräfte auf, die bei Druckanstiegen dazu führen, dass die hydrostatischen Einheiten zurückgeschwenkt werden, d.h. weniger Öl fördern und somit selbsttätig dem Druckaufbau entgegenwirken.

Bei bekannten Lösungen wird dies durch das Positionsstellelement unterbunden, das die Stellposition vorgibt. Das Positionsstellelement arbeitet somit vergleichsweise steif, wodurch ein feinfühliges Fahren der mobilen Arbeitsmaschine erschwert wird.

Um dieses Problem zu beheben, ist vorgesehen, dass eine oder beide Stellkammern des Stellgliedes, das insbesondere als Stellzylinder ausgebildet ist, mit einem oder mehreren Speichern verbunden sind. Kommt es zu einem Druckanstieg im hydraulischen Kreis des Variators, wirken die genannten Rückstellkräfte des Variators auf den oder die Speicher, d.h. können ausweichen, so dass ein "weicheres" Verhalten erhalten wird. Der im hydraulischen Kreis entstehende Druckgradient wird somit gemildert, was das Fahrverhalten verbessert.

Das weniger steife Verhalten wird nicht nur bei einem Druckanstieg, sondern auch bei einer Druckentlastung erhalten. Für den Fall eines hochtransienten Druckabfalls, wie er beispielsweise bei einem Lastabwurf auftritt, wird aus dem oder den Speichern Öl in den Stellzylinder oder das sonstige Stellelement nachgeschoben, so dass die Variatorregelung bzw. -einstellung stabil bleibt.

Das Stellglied kann als Stellzylinder, insbesondere als Gleichlaufstellzylinder ausgeführt sein, der zumindest zwei durch einen verschiebbaren Kolben getrennte Kammern aufweist, von denen jede mit einem eigenen Speicher in Verbindung steht.

Zwischen dem Stellglied und dem Speicher kann ein Drosselelement, vorzugsweise ein hinsichtlich des Strömungswiderstandes einstellbares Drosselelement vorhanden sein, das den Strömungswiderstand einstellt, den das in den Speicher strömende Hydrauliköl erfährt.

Zur Sicherstellung eines großen Ölvolumenstroms vom Speicher zu dem Stellglied kann zwischen dem Stellglied und dem Speicher zumindest ein Rückschlagventil angeordnet sein.

Denkbar ist es, wenn zwischen dem Stellglied und dem Speicher wenigstens ein Absperrventil angeordnet ist, mittels dessen die hydraulische Verbindung zwischen dem Stellglied und dem Speicher trennbar ist.

Das Verhalten des oder der Speicher kann somit abgeschaltet werden. Ist ein weicheres Verhalten gewünscht, beispielsweise bei hochtransienten Druckänderungen zur Zugkraftregelung oder beispielsweise bei Fahrbereichsschaltungen, kann das gewünschten Eigenstellverhalten der hydrostatischen Einheiten des Variators mittels des oder der Speicher genutzt werden. Soll hingegen eine exakt definierte Stellung durch das Positionsstellelement diktiert werden, das dem Stellglied vorgeschaltet ist, kann die Verbindung zwischen dem Stellelement und dem oder den Speichern getrennt werden.

Somit kann durch wenigstens ein Absperrventil die Speicherwirkung auf den oder die Stellglieder, wie z.B. Stellzylinder abgeschaltet werden.

Denkbar ist es, dass wenigstens zwei Speicher vorhanden sind und dass ein Ventil vorgesehen ist, das in einer Ventilstellung die Speicher hydraulisch miteinander verbindet, so dass ein Druckausgleich zwischen den Speichern möglich ist. Dadurch wird sichergestellt, dass bei einem Zuschalten der Speicher (durch Öffnen des Absperrventils) keine unerwünschten Stellvorgänge stattfinden, ausgelöst etwa durch unterschiedliche Speicherdrücke.

Vorzugsweise ist vorgesehen, dass es sich bei dem Absperrventil und dem Ventil um ein und dasselbe Ventil handelt. Wird somit die Verbindung zwischen dem Stellglied und den Speichern getrennt, wird gleichzeitig eine Verbindung zwischen den Speichern hergestellt.

Es können Mittel zur Vorhersage von Lastsituationen vorgesehen sein, die auf den Fahrantrieb derart einwirken, dass der Fahrantrieb in Abhängigkeit der vorhergesagten Lastsituation eingestellt wird.

Eine Vorhersage von Lastsituationen kann beispielsweise genutzt werden für die Verstellung der Hydrostatik, für das vorzeitige Schalten in einen niedrigen Gang und/oder auch für das Anheben der Dieselmotordrehzahl, womit der Dieselmotor besser mit Lastspitzen umgehen kann.

Diese Aufzählung ist exemplarischer Natur und nicht abschließend.

Gemäß dem Verfahren kann z.B. die Information bzgl. der Position der Arbeitsausrüstung in Bezug auf das Trägerfahrzeug berücksichtigt werden, um die Steuerbarkeit der Arbeitsmaschine zu verbessern und den Kraftstoffverbrauch zu reduzieren.

Um die Steuerbarkeit von Fahrantrieben unter speziellen Betriebsbedingungen im Hinblick auf gutes Fahrverhalten und Kraftstoffverbrauch sicherstellen zu können, ist vorgesehen, für die Steuerung anspruchsvolle Betriebsbedingungen möglichst frühzeitig zu erkennen. Somit kann sich die Steuerung bzw. der Fahrantrieb auf diese anspruchsvollen Situationen einstellen.

Insbesondere die beschränkte Verstelldynamik bei hydraulischen und bei hydraulisch-mechanischen Antrieben verlangt ein besonders hohes Maß an Steuerungsgüte, um möglichst schnell auch veränderliche Lasten reagieren zu können.

So kann beispielsweise die Position der Arbeitsausrüstung einer mobilen Arbeitsmaschine darauf hinweisen, ob in den nächsten Momenten mit anspruchsvollen Lastsituationen zu rechnen ist. Handelt es sich bei der mobilen Arbeitsmaschine beispielsweise um einen Radlader, kann dies die Position des Hubarmes und/oder die Position der Schaufel sein, die die Vorhersage eines Ereignisses bzw. einer Lastsituation erlauben.

Somit kann vorgesehen sein, dass die mobile Arbeitsmaschine eine Arbeitsausrüstung aufweist und dass die vorhergesagte Lastsituation von der Position der Arbeitsausrüstung abhängt.

Denkbar ist es weiterhin, dass die Mittel derart ausgebildet sind, dass durch diese ein statistisches, modellprädikatives Verfahren durchführbar ist, das die Position der Arbeitsausrüstung berücksichtigt.

Es kann ein Zustandsautomat zur Vorhersage der Lastsituation vorgesehen sein. Dieser kann konservativ parametrisiert sein, um eine möglichst zuverlässige Treffersicherheit bzgl. des eintretenden Ereignisses zu erzielen. Ein Nachteil kann in einer Schmälerung der zu erzielenden Verbesserung richten. Das Verfahren kann somit die Steuerung eines Fahrantriebes eines mobilen Arbeitsgerätes umfassen, wobei die Ausrüstungsposition von Hubarm und/oder der Schaufel oder eines sonstigen Teiles der Arbeitsmaschine durch einen Zustandsautomat berücksichtigt wird.

Der Zustandsautomat steht mit dem Fahrantrieb in Verbindung und kann diesen entsprechend des vorhergesagten Zustandes ansteuern.

Eine zweite Vorhersagemöglichkeit ist die modellprädikative Vorhersage für zukünftige Lastsituationen, die die Betriebshistorie berücksichtigen und dadurch eine größere Ausreizung der zu erzielenden Verbesserung zulassen kann. In diesem Fall kann das Verfahren somit die Steuerung eines Fahrantriebes eines mobilen Arbeitsgerätes umfassen, wobei die Ausrüstungsposition von Hubarm und/oder der Schaufel oder eines sonstigen Teiles der Arbeitsmaschine durch ein statistisches modellprädikatives Verfahren berücksichtigt wird. Das Ergebnis der Vorhersage kann genutzt werden, um den Fahrantrieb entsprechend der Vorhersage anzusteuern.

Grundsätzlich können auch andere Signale als Signale, die die Arbeitsausrüstung betreffen, verwendet werden, um einen Lastzustand vorherzusagen und den Fahrantrieb entsprechend anzusteuern.

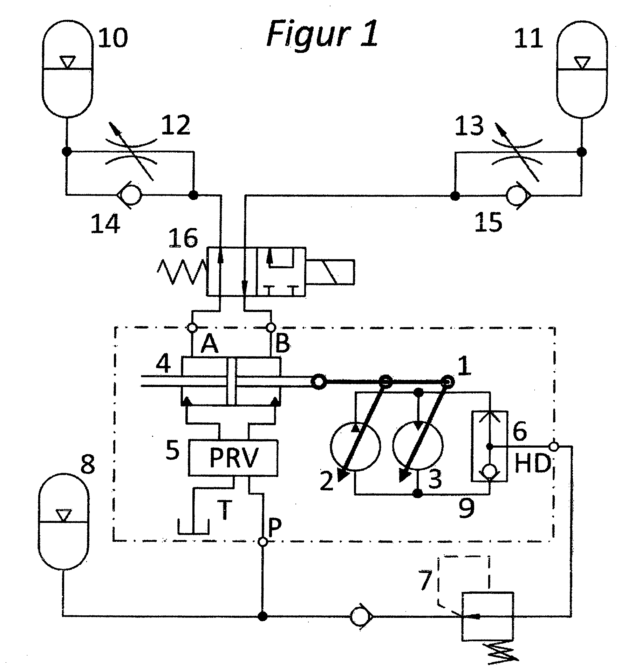

Weitere Einzelheiten und Vorteile der Erfindung werden anhand eines in der Zeichnung dargestellten Ausführungsbeispiels näher erläutert. Die Figur zeigt eine schematische Darstellung eines hydrostatischen Getriebes gemäß einer Ausführungsform der Erfindung.

Mit dem Bezugszeichen 1 ist ein hydrostatisches Getriebe, d.h. ein Variator umfassend zweite hydrostatische Einheiten 2, 3 in Form wenigstens einer Pumpe und wenigstens eines Hydromotors dargestellt.

Die beiden Hydrostatikeinheiten 2, 3 sind kennen in einem gemeinsamen Joch angeordnet, dies in der Figur dargestellt ist.

Die Variatoreinheiten 2, 3 werden mittels des Jochs durch einen Gleichlaufstellzylinder 4 in die erforderliche Position verstellt bzw. verschwenkt.

Der Zylinder 4 weist einen Kolben und zwei rechts bzw. links von dem Kolben sich erstreckende Zylinderkammern auf.

Der Zylinder 4 wird durch ein Positionsregelventil (PRV) 5 gestellt.

Wie dies aus der Figur hervorgeht, steht das Ventil 5 mit dem hydrostatischen Kreis 9 des Variators 1 über den Anschluss P in Verbindung. Bei aus dem Stand der Technik bekannten Anordnungen wird das Ventil 5 über den abgewogenen Hochdruck 6 aus dem hydrostatischen Kreis 9 gespeist. Der abgewogene Hochdruck (HD) 6 ist der höhere der beiden Drücke im Kreis 9. Dieser Druck kann bis zu 450 bar betragen. Somit muss bei aus dem Stand der Technik bekannten Anordnungen das Ventil 5 über einen sehr großen Druckbereich sehr präzise arbeiten. Erfindungsgemäß befindet sich zwischen dem hydrostatischen Kreis 9 des Variators 1 und dem Ventil 5 ein Druckminderer 7, der dafür sorgt, dass die Druckversorgung, d.h. die Stellenergie für das Ventil 5 gegenüber bekannten Anordnungen auf ein geringeres Niveau gebracht wird. Durch das Druckminderventil 7 kann beispielsweise der Druck, der an dem Ventil 5 anliegt, gegenüber dem in dem Kreis 9 herrschenden abgewogenen Druck halbiert werden, wobei dies nur eine exemplarische Ausgestaltung der Erfindung darstellt. Auch andere Werte als eine Reduktion auf 50 % sind möglich und von der Erfindung umfasst.

Ein weiterer Anschluss des Positionsregelventils 5 steht mit dem drucklosen Tank T in Verbindung.

Je nach der Stellung des Positionsregelventils oder eines sonstigen Positionsstellelementes wird die rechte oder die linke Kammer des Stellzylinders mit Druck beaufschlagt und die andere Kammer in den Tank T druckentlastet.

Das Bezugszeichen 8 stellt einen Speicher für das Hydraulikmedium dar, der ebenfalls mit dem Druckanschluss P des Positionsregelventils 5 verbunden ist.

Der Speicher stellt für den Fall von Druckeinbrüchen im Kreis 9 sicher, dass immer ein bestimmter Druck an dem Positionsregelventil 5 anliegt. Somit kann ein zuverlässiges Stellverhalten auch bei einer Unterversorgung im Kreis 9 erreicht werden. Der Speicher 8 ist in dem Bereich stromabwärts des Druckminderers angeordnet, d.h. wird ebenfalls nur mit dem durch den Druckminderer reduzierten Druck beaufschlagt.

Der Stellzylinder 4 weist wie oben ausgeführt zwei Kammern auf, von denen jede je nach Stellung des Positionsregelventils 5 mit Druck über den Anschluss P versorgt wird oder mit dem Tank T verbunden wird.

Jede der beiden Kammern des Zylinders 4 steht darüber hinaus über die Anschlüsse A und B mit jeweils einem Hydraulikspeicher 10, 11 in Verbindung.

Zwischen den Speichern 10, 11 und dem Stellventil 4 befindet sich das Absperrventil 16, das als 2/2-Wegeventil ausgeführt ist. Grundsätzlich sind auch andere Ventilausführungen denkbar und von der Erfindung mit umfasst.

In der in der Figur gezeigten Position des Ventils 16 steht die linke Kammer des Zylinders 4 mit dem Speicher 10 und die rechte Kammer des Zylinders 4 mit dem Speicher 11 in Verbindung.

In der geschlossenen Ventilstellung des Ventils 16 sind die Kammern des Stellzylinders 4 von den Speichern 10, 11 getrennt. Die Speicher 10, 11 sind in dieser Ventilstellung jedoch mittels des Ventils miteinander verbunden, so dass ein Druckausgleich zwischen diesen stattfindet.

Die Speicher 10, 11 haben die Aufgabe, ein gewisses Entweichen des Stellzylinders 4 bei Last zu ermöglichen, indem ein Teil des Hydraulikmediums in den betreffenden Speicher fließt. Auf diese Weise wird der im Kreis 9 auftretende Druckanstieg gedämpft, wodurch sich das Fahrverhalten verbessert.

Im Falle eine hochtransienten Druckabfalls wird aus dem betreffenden Speicher über das Rückschlagventil 14 bzw. 15 Öl in den Stellzylinder nachgeschoben, so dass die Variatorregelung stabil bleibt.

Die Bezugszeichen 12, 13 kennzeichnen ggf. einstellbare Drosselstellen im Zulauf zu den Speichern 10, 11.

## Patentansprüche

1. Fahrantrieb, insbesondere leistungsverzweigter Fahrantrieb, für eine mobile Arbeitsmaschine, insbesondere für einen Radlader, wobei der Fahrantrieb umfasst:
einen in einem hydraulischen System angeordneten hydraulischen Variator (1), der zwei hydrostatische Einheiten (2, 3) in Form einer Pumpe (2) und eines Hydromotors (3) aufweist,
ein Stellglied (4), das mit dem Variator (1) derart in Verbindung steht, dass die in einem gemeinsamen Joch angeordneten zwei hydrostatischen Einheiten (2, 3) des Variators (1) mittels des Stellgliedes (4) im Gleichlauf verstellbar sind,
ein mit dem hydraulischen System verbundenes Positionsstellelement (5), das mit dem Stellglied (4) derart verbunden ist, dass das Stellglied (4) mittels des Positionsstellelementes (5) gestellt wird, wobei
zwischen dem Positionsstellelement (5) und einem hydrostatischen Kreis (9) des Variators (1) ein Druckminderer (7) angeordnet ist,
**dadurch gekennzeichnet, dass**
es sich bei dem Positionsstellelement (5) um ein Positionsregelventil handelt.

2. Fahrantrieb nach Anspruch 1, **dadurch gekennzeichnet, dass** es sich bei dem Druckminderer (7) um ein Druckminderventil handelt.

3. Fahrantrieb nach Anspruch 1 oder 2, **dadurch gekennzeichnet, dass** es sich bei dem Stellglied (4) um einen Stellzylinder, insbesondere um einen Gleichlaufstellzylinder handelt.

4. Fahrantrieb nach einem der vorhergehenden Ansprüche, **dadurch gekennzeichnet, dass** der Druckminderer (7) derart ausgebildet ist, dass der an dem Positionsstellelement (5) anliegende Druck auf ein einen Wert von 75 % oder weniger und vorzugsweise auf einen Wert von 50 % oder weniger des Druckes in dem hydraulischen System verringert wird.

5. Fahrantrieb nach einem der vorhergehenden Ansprüche, **dadurch gekennzeichnet, dass** ein Speicher (8) vorgesehen ist, der mit dem Positionsstelleelement derart verbunden ist, dass das Positionsstelleelement aus dem Speicher (8) mit Hydraulikmedium versorgt wird

6. Fahrantrieb nach einem der vorhergehenden Ansprüche, **dadurch gekennzeichnet, dass** das Stellglied (4) mit einem Speicher (8) derart in Verbindung steht, dass Hydraulikmedium von dem Stellglied (4) in den Speicher (8) und/oder von dem Speicher (8) zu dem Stellglied (4) strömt.

7. Fahrantrieb nach einem der vorhergehenden Ansprüche, **dadurch gekennzeichnet, dass** das Stellglied (4) als Stellzylinder, insbesondere als Gleichlaufstellzylinder ausgeführt ist, der zwei Kammern aufweist, von denen jede mit einem Speicher (8) in Verbindung steht.

8. Fahrantrieb nach einem der vorhergehenden Ansprüche, **dadurch gekennzeichnet, dass** zwischen dem Stellglied (4) und dem Speicher (8) ein Drosselelement, vorzugsweise ein hinsichtlich des Strömungswiderstandes einstellbares Drosselelement vorhanden ist.

9. Fahrantrieb nach einem der vorhergehenden Ansprüche, **dadurch gekennzeichnet, dass** zwischen dem Stellglied (4) und dem Speicher (8) ein Rückschlagventil angeordnet ist.

10. Fahrantrieb nach einem der vorhergehenden Ansprüche, **dadurch gekennzeichnet, dass** zwischen dem Stellglied (4) und dem Speicher (8) ein Absperrventil angeordnet ist, mittels dessen die hydraulische Verbindung zwischen dem Stellglied (4) und dem Speicher (8) trennbar ist.

11. Fahrantrieb nach einem der vorhergehenden Ansprüche, **dadurch gekennzeichnet, dass** wenigstens zwei Speicher (8) vorhanden sind und dass ein Ventil vorgesehen ist, das in einer Ventilstellung die Speicher (8) derart miteinander verbindet, dass ein Druckausgleich zwischen den Speichern (8) erfolgt.

12. Fahrantrieb nach Anspruch 10 und 11, **dadurch gekennzeichnet, dass** es sich bei dem Absperrventil und dem Ventil um ein und dasselbe Ventil handelt.

## Claims

1. Travel drive, in particular power-split travel drive, for a movable work machine, in particular for a wheeled loader, wherein the travel drive comprises:
a hydraulic variator (1) that is arranged in a hydraulic system and comprises two hydrostatic units (2, 3) in the form of a pump (2) and a hydraulic motor (3),
an actuator (4) that is connected to the variator (1) such that the two hydrostatic units (2, 3) of the variator (1), arranged in a common yoke, can be adjusted synchronously by means of the actuator (4),
a position adjustment element (5) that is connected to the hydraulic system,
and is connected to the actuator (4) such that the actuator (4) is adjusted by means of the position adjustment element (5), wherein
a pressure reducer (7) is arranged between the position adjustment element (5) and a hydrostatic circuit (9) of the variator (1),
**characterised in that**
the position adjustment element (5) is a position control valve.

2. Travel drive according to claim 1, **characterised in that** the pressure reducer (7) is a pressure reducing valve.

3. Travel drive according to claim 1 or 2, **characterised in that** the actuator (4) is an actuating cylinder, in particular a synchronous actuating cylinder.

4. Travel drive according to any of the preceding claims, **characterised in that** the pressure reducer (7) is designed such that the pressure applied to the position adjustment element (5) is reduced to a value of 75% or less, and preferably to a value of 50% or less, of the pressure in the hydraulic system.

5. Travel drive according to any of the preceding claims, **characterised in that** a reservoir (8) is provided that is connected to the position adjustment element such that the position adjustment element is supplied with hydraulic medium from the reservoir (8).

6. Travel drive according to any of the preceding claims, **characterised in that** the actuator (4) is connected to a reservoir (8) such that the hydraulic medium flows from the actuator (4) into the reservoir (8) and/or from the reservoir (8) to the actuator (4).

7. Travel drive according to any of the preceding claims, **characterised in that** the actuator (4) is designed as an actuating cylinder, in particular as a synchronous actuating cylinder, that comprises two chambers, each of which is connected to a reservoir (8).

8. Travel drive according to any of the preceding claims, **characterised in that** a throttle element, preferably a throttle element that can be adjusted with respect to the flow resistance, is provided between the actuator (4) and the reservoir (8).

9. Travel drive according to any of the preceding claims, **characterised in that** a check valve is arranged between the actuator (4) and the reservoir (8).

10. Travel drive according to any of the preceding claims, **characterised in that** a shutoff valve is arranged between the actuator (4) and the reservoir (8), by means of which valve the hydraulic connection between the actuator (4) and the reservoir (8) can be broken.

11. Travel drive according to any of the preceding claims, **characterised in that** at least two reservoirs (8) are provided, and that a valve is provided which, in one valve position, interconnects the reservoirs (8) such that pressure compensation takes place between the reservoirs (8).

12. Travel drive according to claim 10 and 11, **characterised in that** the shutoff valve and the valve are the same valve.

## Revendications

1. Système d'entraînement, en particulier système d'entraînement à embranchement de couple, pour un engin de travail mobile, en particulier pour une chargeuse sur pneus, dans lequel le système d'entraînement comprend :
un variateur (1) hydraulique disposé dans un système hydraulique, qui présente deux unités (2, 3) hydrostatiques sous la forme d'une pompe (2) et d'un moteur hydraulique (3),
un organe de réglage (4), qui est relié au variateur (1) de telle manière que les deux unités (2, 3) hydrostatiques, disposées dans une culasse commune, du variateur (1) peuvent être ajustées de manière synchrone au moyen de l'organe de réglage (4),
un élément de réglage de position (5) relié au système hydraulique, qui est relié de telle manière à l'organe de réglage (4) que l'organe de réglage (4) est réglé au moyen de l'élément de réglage de position (5), dans lequel un réducteur de pression (7) est disposé entre l'élément de réglage de position (5) et un circuit hydrostatique (9) du variateur (1),
**caractérisé en ce que**
l'élément de réglage de position (5) est une soupape de régulation de position.

2. Système d'entraînement selon la revendication 1, **caractérisé en ce que** le réducteur de pression (7) est une soupape de réduction de pression.

3. Système d'entraînement selon la revendication 1 ou 2, **caractérisé en ce que** l'organe de réglage (4) est un cylindre de réglage, en particulier un cylindre de réglage synchrone.

4. Système d'entraînement selon l'une quelconque des revendications précédentes, **caractérisé en ce que** le réducteur de pression (7) est réalisé de telle manière que la pression appliquée au niveau de l'élément de réglage de position (5) est diminuée sur une valeur de 75 % ou moins et de préférence sur une valeur de 50 % ou moins de la pression dans le système hydraulique.

5. Système d'entraînement selon l'une quelconque des revendications précédentes, **caractérisé en ce qu'**un réservoir (8) est prévu, lequel est relié à l'élément de réglage de position de telle manière que l'élément de réglage de position est alimenté en milieu hydraulique provenant du réservoir (8).

6. Système d'entraînement selon l'une quelconque des revendications précédentes, **caractérisé en ce que** l'organe de réglage (4) est relié à un réservoir (8) de telle manière que du milieu hydraulique circule depuis l'organe de réglage (4) dans le réservoir (8) et/ou depuis le réservoir (8) vers l'organe de réglage (4).

7. Système d'entraînement selon l'une quelconque des revendications précédentes, **caractérisé en ce que** l'organe de réglage (4) est réalisé en tant que cylindre de réglage, en particulier en tant que cylindre de réglage synchrone, qui présente deux chambres, dont chacune est reliée à un réservoir (8).

8. Système d'entraînement selon l'une quelconque des revendications précédentes, **caractérisé en ce qu'**un élément d'étranglement, de préférence un élément d'étranglement pouvant être réglé eu égard à la résistance d'écoulement, est présent entre l'organe de réglage (4) et le réservoir (8).

9. Système d'entraînement selon l'une quelconque des revendications précédentes, **caractérisé en ce qu'**une soupape anti-retour est disposée entre l'organe de réglage (4) et le réservoir (8).

10. Système d'entraînement selon l'une quelconque des revendications précédentes, **caractérisé en ce qu'**est disposée entre l'organe de réglage (4) et le réservoir (8), une soupape de fermeture, au moyen de laquelle la liaison hydraulique entre l'organe de réglage (4) et le réservoir (8) peut être coupée.

11. Système d'entraînement selon l'une quelconque des revendications précédentes, **caractérisé en ce qu'**au moins deux réservoirs (8) sont présents, et qu'une soupape est prévue, laquelle relie dans une position de soupape les réservoirs (8) entre eux de telle manière qu'a lieu une compensation de pression entre les réservoirs (8).

12. Système d'entraînement selon la revendication 10 et 11, **caractérisé en ce que** la soupape d'arrêt et la soupape sont une seule et même soupape.
